**Europäisches Patentamt**

(19) **European Patent Office**

**Office européen des brevets**

(11) Publication number: **0 117 039**

**A1**

(12) # EUROPEAN PATENT APPLICATION

(21) Application number: **84300181.9**

(22) Date of filing: **12.01.84**

(51) Int. Cl.³: **G 05 D 16/20**
**F 16 K 17/06**

(30) Priority: **14.01.83 GB 8301053**

(43) Date of publication of application:
**29.08.84 Bulletin 84/35**

(84) Designated Contracting States:
**AT BE CH DE FR GB IT LI LU NL SE**

(71) Applicant: **VFP FLUID POWER LIMITED**
**South Marston Industrial Estate P.O. Box 8**
**Swindon Wilts, SN3 4RA(GB)**

(72) Inventor: **Carver, Richard**
**17 Eastcott Road**
**Swindon Wilts(GB)**

(72) Inventor: **Poulton, Kenneth A.**
**9 Stonefield Drive Highworth**
**Swindon Wilts SN6 7DA(GB)**

(74) Representative: **Abrams, Michael John et al,**
**HASELTINE LAKE & CO. Hazlitt House 28 Southampton**
**Buildings Chancery Lane**
**London WC2A 1AT(GB)**

(54) **Relief valve assembly.**

(57) A relief valve assembly is disclosed which comprises a main valve (6) and a pilot valve (13). The pilot valve is acted upon by biassing means (15) which tends to close the pilot valve, the arrangment being such that the state of the pilot valve determines whether or not the main valve is opened to modify the fluid flowpath within the valve. The biassing means associated with the pilot valve is seated, at its end remote from the valve head of the pilot valve, against a plunger (17) or similar device whose position is adjusted by a pilot motor (22). The pilot motor is under the command of a microprocessor or other operating means for varying the operation of the motor according to a predetermined sequence, program or signal. Conveniently, the pilot motor is under servo control. A position transducer (23) is preferably provided on the output shaft of the motor, and the output of the transducer is fed into a servo amplifier where it is compared with the command signal from the microprocessor to derive an error signal which is used to control the pilot motor.

Fig.1.

## "RELIEF VALVE ASSEMBLY"

This invention relates to a relief valve assembly which is arranged so that the relief pressure can be varied according to a predetermined sequence during the operation of the valve.

According to the present invention, there is provided a relief valve assembly comprising a main valve having an inlet and an outlet and a pilot valve, the pilot valve being acted upon by biassing means which tends to close the pilot valve, and the arrangement being such that the state of the pilot valve determines whether or not the main valve is opened to modify the fluid flow path within the valve, wherein the biassing means, associated with the pilot valve, is sealed at its end remote from the valve head of the pilot valve against a plunger or similar device whose position is adjusted by a pilot motor under the command of a microprocessor or other means for varying the operation of the motor according to a sequence, programme or signal.

Preferably the arrangement is such that, if the control microprocessor fails or malfunctions, the pilot motor is responsive to a back-up signal from a further control means.

The valve assembly can be, for example, such that the pilot valve responds to the pressure at the inlet of the main valve or to the pressure differential between the inlet and outlet of the main valve.

Preferably the pilot motor is under servo control. This can be achieved by providing a position transducer, e.g. a potentiometer, on the output shaft of the motor which provides an output indicative of the plunger position at any instance. This output is used as a feedback signal and is fed into a servo amplifier where it is compared with the command signal from, for example, a microprocessor. The result of this comparison is an error signal which is amplified and passed to the armature of the pilot motor. The pilot motor then runs until the error signal reduces to zero.

The electrical circuitry including the feedback transducer and servo amplifier preferably includes an output signal for monitoring purposes, which signal may relate to the position of the feedback transducer or to the error signal as derived by the servo amplifier. In the latter case, a buffer amplifier would be connected to the command signal from the microprocessor and to the output of the feedback transducer in order to derive an output for error signal monitoring.

Preferably, the armature of the pilot motor drives the output shaft of the motor through a drive arrangement which ensures that, in the event of a power failure, the pilot motor output shaft will remain in the position that it was prior to the power failure, thus retaining the relief valve setting.

The pilot stage of the valve can be integral with the main valve, or it can be removed and mounted remotely. With the latter arrangement, the pilot stage is coupled to the valve proper through small bore pipes or flexible tubes which connect to a plate mounted on the valve proper.

The invention is expected to find particular application in the testing of aircraft parts, for example in testing of structures where practical load stresses are applied to different parts of the structure. The applied stresses are cyclical, and the relief setting of the valve can thus be arranged to follow the same pressure profile as that applied to the elements which move the structure. Normally, the application of stress to the structural element under test is controlled by a microprocessor, and the same microprocessor may be used to control the position of the plunger in the valve of this invention.

For a better understanding of the invention, and to show how the same may be carried into effect, reference will now be made, by way of example, to the accompanying drawings in which:

FIGURE 1 illustrates diagrammatically one embodiment of a relief valve in accordance with the invention;

FIGURE 2 illustrates a control circuit for use with the valve arrangement shown in Figure 1; and

FIGURE 3 illustrates diagrammatically a further embodiment of a relief valve in accordance with the invention.

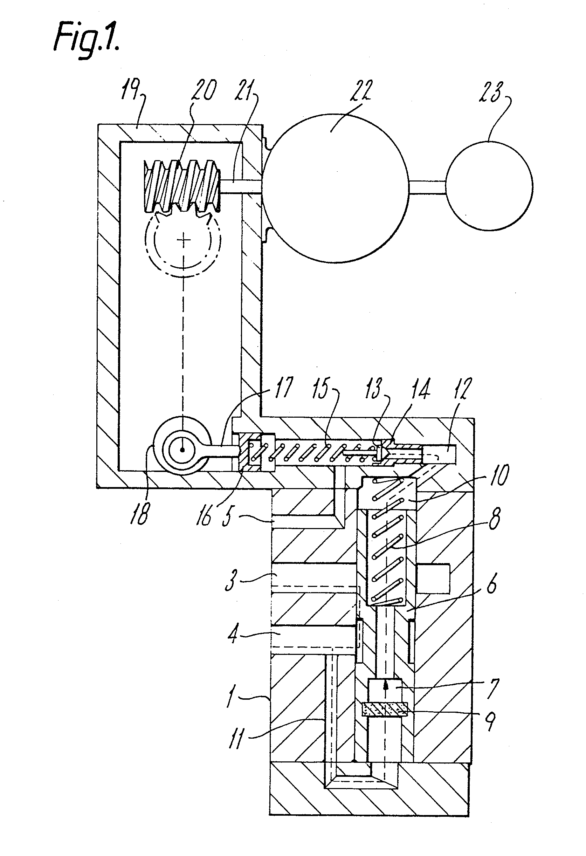

Referring now to Figure 1 of the drawings, the valve comprises a casing 1 having a high pressure inlet 4, an outlet 3 and a drain outlet 5. A spool 6 is mounted on the body of the valve, and includes an orifice 7. A spring 8 is contained within the upper part of the spool 6, and tends to urge the spool downwards onto a sealing position to seal inlet 4 from outlet 3. Orifice 7 permits communication between the inlet 4 and the upper, internal cavity area 10 of spool 6 via a passage 11. The space 10 is in turn in communication with a passage 12 which leads to pilot valve 13. The pilot valve seats against a valve seat 14 and is acted upon by a direct control spring 15. The other end of spring 15 is retained by a movable seat 16 which is connected to a plunger 17. The plunger is supported by a cam 18 which is driven by a gear 19 which in turn is engaged by a drive 20. Drive 20 is part of the output shaft 21 of a pilot motor 22. A position transducer 23 is also mounted on the output shaft of the pilot motor and serves to provide a feedback signal indicative of the instantaneous position of shaft 21 and thus of plunger 17.

In operation, the relief setting of the valve is determined by the force applied to the pilot valve 13 through the direct spring control 15. This spring force is varied by the position of plunger 17. The spring force is reacted by the pressure existing in chamber 12 acting over the area of the pilot valve seat. When the load from this pressure is greater than the spring force the pilot valve opens to allow no further increase in pressure. Should the pressure at the valve inlet tend to increase, the unequal pressure will cause valve 6 to move connecting the inlet to the outlet of the main valve thereby maintaining the pressure at the inlet equal to the pressure selected by the pilot stage. The relief setting of the main valve can thus be continuously varied during operation of the valve by appropriate control of pilot motor 22. The drive arrangement is such that, in the event of a power failure, the output shaft 21 remains in position.

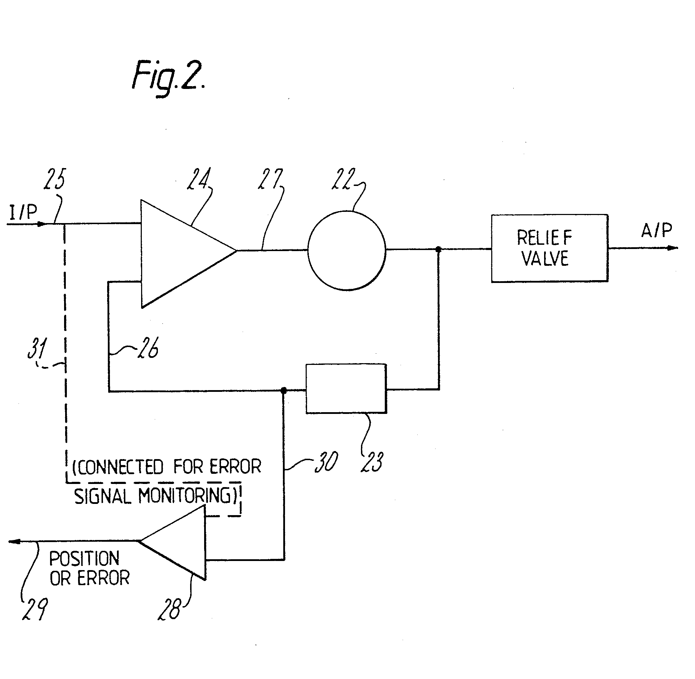

Figure 2 illustrates a preferred control system for adjusting the position of plunger 17 during operation of the valve. The system includes a servo amplifier 24 the output of which is conncted to pilot motor 22 and the two inputs of which are connected to a command microprocessor (not shown) via line 25 and to the transducer via line 26. The output of the transducer at any moment is compared with the command from the microprocessor to derive an amplified error signal which is conveyed by line 27 to the armature of pilot motor 22.

A buffer amplifier 28 is included in the circuit for providing an output signal 29 for monitoring purposes. Buffer amplifier 28 is connected via line 30 to line 26, and may be connected via line 31 to line 25. The output 29 from buffer amplifier 28 may represent either the position of the output shaft of the motor 22 as indicated by the output from transducer 23, or it may be an error signal corresponding to that derived within servo amplifier 24.

The command signal supplied via line 25 can be programmed in accordance with any predetermined operational sequence. This is particularly beneficial when the relief valve is used in conjunction with a hydraulic testing circuit which is arranged to apply cyclical stresses to a component under test.

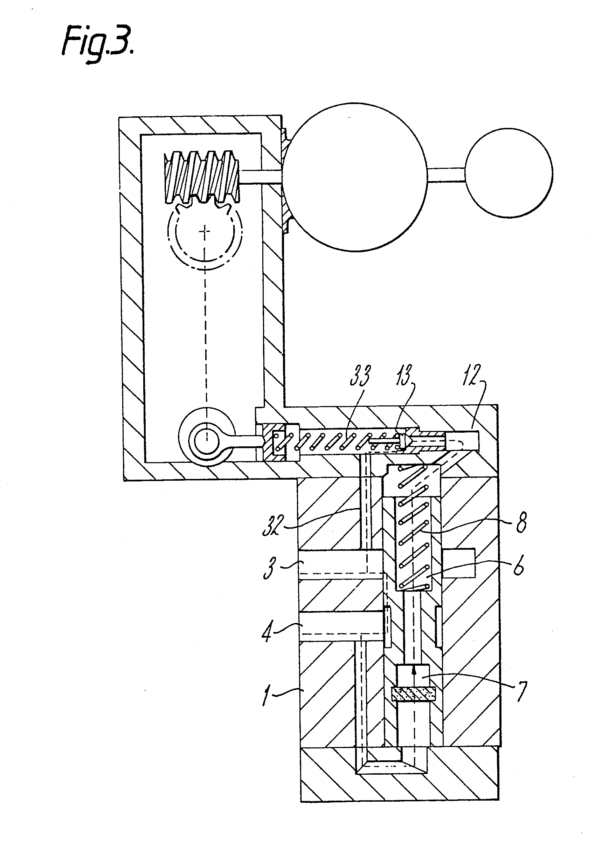

Figure 3 illustrates diagrammatically a further embodiment of a relief valve in accordance with the invention in which the controlled pressure is the differential pressure inlet-to-outlet. Those parts of the valve assembly which correspond to similar parts shown in Figure 1 are given the same reference numbers.

In this version the chamber 33 is connected to the outlet 3 of the main valve. Thus the pilot valve 13 senses the difference in the pressure of chambers 12 and 33 and hence controls the difference in pressure between the inlet 4 and outlet 3 of the main valve.

The main relief valve is held closed by lightly loaded spring 8, the pressure across the relief valve being in balance until the pilot relief valve 13 opens to reduce the pressure at one end, whereupon the unbalanced pressure opens the main relief valve connecting pressure inlet 4 to outlet 3 when the inlet pressure drops or the outlet pressure rises, or the load exerted by the pilot relief spring is increased. After a short time, the pilot relief valve 13 and hence the main relief valve 6 closes. Thus, the required pressure dfferential is maintained.

Claims:

1.  A relief valve assembly comprising a main valve having an inlet and an outlet and a pilot valve, the pilot valve being acted upon by biassing means which tends to close the pilot valve, and the arrangement being such that the state of the pilot valve determines whether or not the main valve is opened to modify the fluid flow path within the valve, wherein the biassing means, associated with the pilot valve, is sealed at its end remote from the valve head of the pilot valve against a plunger or similar device whose position is adjusted by a pilot motor under the command of a microprocessor or other means for varying the operation of the motor according to a sequence, program or signal.

2.  A valve assembly as claimed in claim 1, wherein the pilot motor is under servo control.

3.  A valve assembly as claimed in claim 2, wherein a position transducer is provided on the output shaft of the pilot motor, the output of this transducer being connected to a servo amplifier where said output is compared with a command signal to derive an error signal which is amplified and used to drive the pilot motor.

4.  A valve assembly as claimed in claim 3, wherein said servo amplifier is arranged to produce an output signal for monitoring purposes.

5.  A valve assembly as claimed in claim 4, wherein the output signal from said servo amplifier is related to the error signal derived by the servo amplifier and is derived from a buffer amplifier connected to the command signal from a microprocessor and to the output of the feedback transducer.

6.  A valve assembly as claimed in any preceding claim, wherein the armature of the pilot motor is arranged to drive the output shaft of the motor through a drive arrangement which is such that, in the event of a power failure, the pilot motor output shaft will remain in the position existing at the time of power failure.

7.    A valve assembly as claimed in any preceding claim, wherein the pilot valve is integral with the main valve.

8.    A valve assembly as claimed in any preceding claim, wherein the pilot motor is responsive to a back-up signal capable of providing control in the event that the command from said microprocessor or other operating means should fail.

9.    A valve assembly as claimed in any preceding claim, which is arranged such that the pilot valve responds to the pressure at the inlet of the main valve.

10.    A valve assembly as claimed in any one of claims 1 to 8, wherein the pilot valve is arranged to respond to the pressure differential between the inlet and the outlet of the main valve.

Fig.1.

Fig.2.

Fig.3.

## European Patent Office
## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | DE-A-2 416 235 (BOSCH)<br>* Claims 1,4 * | 1,3 | G 05 D 16/20<br>F 16 K 17/06 |
| A | US-A-3 411 531 (CLARK et al.)<br>* Column 1, lines 40-44, figures 1,3 * | 1 | |
| A | GB-A-2 095 372 (TOKYO KEIKI) | | |
| A | WO-A-8 001 826 (SAAB-SCANIA AB) | | |
| A | FR-A-2 421 418 (BOSCH) | | |
| A | US-A-3 837 224 (REAM) | | TECHNICAL FIELDS SEARCHED (Int. Cl. 3)<br><br>F 16 K 17/00<br>G 05 D 16/00 |
| A | US-A-3 106 084 (HOFFMAN et al.) | | |

The present search report has been drawn up for all claims

| Place of search | Date of completion of the search | Examiner |
|---|---|---|
| BERLIN | 06-04-1984 | SCHLABBACH M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82